# EUROPÄISCHE PATENTSCHRIFT

(11) **EP 1 707 406 B1**
(45) Veröffentlichungstag und Bekanntmachung des Hinweises auf die Patenterteilung: **16.04.2008**
(21) Anmeldenummer: 06004721.4
(22) Anmeldetag: 08.03.2006
(51) Int. Cl.: B60C 23/04

(54) **Halterung zur Befestigung eines elektronischen Bauelements an einem Gummiartikel**
Holding device for fastening an electronic component to a rubber article
Support de fixation d'un composant électronique à un article en caoutchouc

(30) Priorität: 31.03.2005 DE 202005005144 U
(43) Veröffentlichungstag der Anmeldung: 04.10.2006
(73) Patentinhaber: Stahlgruber Otto Gruber GmbH & Co. KG, 85586 Poing (DE)
(72) Erfinder: Scheungraber, Patric, 85652 Pliening (DE); Ketzer, Ludwig, 95111 Regau (DE); Regauer, Egon, 85659 Forstern (DE)
(74) Vertreter: Beetz & Partner

(56) Entgegenhaltungen:
- WO-A-20/04024474
- DE-A1- 10 243 441
- US-A- 5 500 065
- US-B1- 6 244 104
- US-B1- 6 546 982

## Beschreibung

Die Erfindung betrifft eine Halterung zur Befestigung eines elektronischen Bauelements an einem Gummiartikel, vorzugsweise einem Reifen, einem Fördergurt, od. dgl.

In neuerer Zeit sind verschiedene Systeme zur Kennzeichnung von Luftreifen für Personenkraftwagen und Nutzfahrzeuge bekannt geworden, die elektronisch gespeicherte und abrufbare Datensätze für verschiedenartige Parameter des jeweiligen Luftreifens, wie Dimensionen, Hersteller, Typ, Innendruck, usw. enthalten. Gebräuchlich sind u.a. Transponder mit mindestens einem Chip und einer Antenne, die meist in einem gemeinsamen stoßfesten Gehäuse aus z.B. relativ hartem Kunststoff, Gummi, oder Metall untergebracht sind. Aus Gründen der Platzersparnis und einer möglichst langen Lebensdauer werden bevorzugt inaktive Transponder eingesetzt, die erst durch ein von einem äu-ßeren Lesegerät erzeugtes elektromagnetisches Feld über die eingebaute Antenne aktiviert werden. Nachteilig bei diesem Transpondertyp ist es, daß nur die zum Zeitpunkt eines Ablesevorganges gespeicherten Daten verfügbar sind, also eine kontinuierliche Überwachung z.B. des Reifeninnendrucks nicht möglich ist. Allerdings sind z.B. aus der WO 01/25034 A1 auch elektronische Bauelemente zur Anzeige nicht nur der reifentypischen festen Daten, sondern auch von Betriebsparametern, wie Luftdruck und Temperatur bekannt, die über eine eigene Stromversorgung (z.B. eine Batterie) verfügen, welche eine kontinuierliche Speicherung und Absendung der die Betriebsparameter kennzeichnenden Datensätze ermöglicht. Derartige Systeme sind jedoch komplex aufgebaut und gegenüber den im Fahrbetrieb auftretenden Reifenbelastungen empfindlich, so daß sie nicht nur einen hohen Kostenaufwand verursachen können, sondern eventuell auch eine begrenzte Lebensdauer aufweisen.

Problematisch bei allen bekannt gewordenen Transpondersystemen ist die Befestigung der jeweiligen Bauelemente bzw. Transponder an der Innenfläche des jeweiligen Luftreifens. Da die regelmäßig in einem druckfesten Gehäuse gekapselten elektronischen Bauelemente den im Fahrbetrieb auftretenden Walkbeanspruchungen des Reifens ausgesetzt sind, ergeben sich nach längeren Fahrstrecken bzw. Betriebszeiten des Reifens Ablöseerscheinungen zwischen dem unmittelbar auf den Reifen aufvulkanisierten Gummiunterbau und dem formsteifen Gehäuse der elektronischen Bauelemente. Daneben besteht noch der Wunsch verschiedener Reifenhersteller, die elektronischen Bauelemente derart an der Innenfläche eines Luftreifens festzulegen, daß sie nach erkannten Beschädigungen auf relativ einfache Weise ausgebaut und durch neue ersetzt werden können.

Aus der US-6,217,683 B ist ein Halterungssystem für elektronische Bauteile, insbesondere für einen Transponder, bekannt, bei dem auf einer relativ festen großflächigen Gummischicht mehrere mit seitlichen Zähnen versehene Zapfen fest angeformt sind. Eine Seite der festen Gummi-Tragschicht ist mit einer Haftschicht versehen, welche auf die ggf. mechanisch vorbereitete Innenfläche des Reifens geklebt bzw. vulkanisiert wird. Die elektronischen Bauelemente, bestehend aus einem Chip und einer Antenne, sind in einem formsteifen flachen Gehäuse untergebracht, das mindestens einen Durchbruch aufweist. Dieses Gehäuse wird mittels des Durchbruchs auf die vorstehenden Zapfen gedrückt, deren seitliche Zähne ein unbeabsichtigtes Lösen verhindern sollen. Zwischen der Unterseite des relativ druckfesten Körpers und der Oberseite der Gummi-Tragschicht ist ein Spalt mit vorgegebener Spaltweite vorgesehen, um gewisse Ausgleichsbewegungen des Körpers zuzulassen. Im Langzeitbetrieb des Luftreifens werden auch bei dieser Halterung hohe Kräfte auf die elastisch verformbaren Zapfen ausgeübt, welche die Lebensdauer dieser Traganordnung begrenzen.

Aus der WO 03/070496 A1 ist eine Halterungsanordnung für elektronische Bauelemente, insbesondere einen Transponder, an der Innenseite eines Luftreifens bekannt, die eine direkt auf die Oberfläche des Reifens vulkanisierte Gummilage enthält, auf welcher der Transponder bzw. dessen druckfestes Gehäuse platziert wird. Als Abdeckung dient eine weitere Gummilage. Die Fixierung des Transponders erfolgt über einen sog. Klett-Verschluß, dessen Schlaufen an der unteren Gummilage und dessen Haken an der oberen Gummischicht angeordnet sind.

Aus der DE 102 43 441 B ist ein Transponder für Reifen mit einer Befestigungsanordnung bekannt, bei dem mindestens ein Chip und eine Antenne in einem als Substrat bezeichneten stoßfesten Körper eingebettet sind. Das Substrat ist durch eine Verbindungsstruktur mit weicher oder gleitender Lagerung von der Reifeninnenseite durch ein Trennmedium entkoppelt, wodurch vermieden werden soll, daß durch das Walken des Reifens im Fahrbetrieb erzeugte mechanische Spannungen auf das Substrat übertragen werden. Allerdings ist das Substrat aufgrund seiner Masse erheblichen Beanspruchungen durch Fliehkraft und extreme Bremsverzögerungen unterworfen. Darüber hinaus ergeben sich Probleme bei der direkten Befestigung bzw. Vulkanisation der Verbindungsstruktur auf der Reifeninnenseite aufgrund der bei der Reifenherstellung herrschenden hohen Druck- und Temperaturbelastungen.

In der EP 936 089 A ist eine Halterung für ein elektronisches Bauteil, insbesondere ein Transponder, an der Innenseite eines Luftreifens beschrieben, die einen durchvulkanisierten abstehenden Gummikörper aufweist, in welchem ein Aufnahmenapf zum Einsetzen eines Transponderkörpers vorgesehen ist. Die Fixierung des Körpers in dem Napf erfolgt durch Klebung oder ein Schraubgewinde.

Die US-B1-6 546 982 zeigt eine Vorrichtung zum Montieren eines Transpondermoduls, wobei eine kreisförmige Lippe vorgesehen ist, die etwas kleiner als ein einzusetzendes Transpondermodul ausgebildet ist. Dadurch kann das Transpondermodul durch eine Öffnung in einen Hohlraum eingesetzt werden und in dem Hohlraum durch eine kreisförmige Lippe gehalten werden.

Die US-B1-6 244 104 betrifft ein Verfahren zum Reparieren eines Luftreifens, wobei eine Abdeckung erwähnt ist, die mit unvulkanisiertem Gummimaterial zum Schutz desselben vor Schmutz verbunden ist.

Aufgabe der Erfindung ist es, eine Halterung zur Befestigung eines elektronischen Bauelements an einem Gummiartikel, vorzugsweise an der Innenseite eines Luftreifens, eines Fördergurtes, od. dgl. zu schaf fen, das eine mit einfachen Mitteln durchzuführende lösbare oder auch dauerhafte Befestigung des elektronischen Bauelements ermöglicht und eine auch den hohen Betriebsbeanspruchungen des Luftreifens über lange Betriebszeiten widerstehende Fixierung gewährleistet.

Diese Aufgabe wird durch die im Patentanspruch 1 angegebenen Merkmale gelöst. Die erfindungsgemäße Halterung kann eine unvulkanisierte warm, heiß und/oder kalt vulkanisierbare Verbindungsschicht aufweisen, die bis zum Gebrauch mit einer haftenden lösbaren gasdichten und/oder lichtundurchlässigen Schutzfolie abgedeckt sein kann. Das Vorsehen der Schutzfolie kann abhängig von dem Material der Verbindungsschicht nicht notwendig sein. Auf dieser Verbindungsschicht kann sich ein Hauptkörper aus unvulkanisiertem, vollund/oder teilvulkanisiertem Gummimaterial befinden, in dem eine Aussparung bzw. Ausnehmung zur Aufnahme eines elektronischen Bauelements ausgebildet sein kann. Der Hauptkörper kann eine integrierte Überdeckung aufweisen, die durch geeignete Mittel das elektronische Bauelement fixieren kann. Wenn die Verbindungsschicht aus einem vollvulkanisierten Material ausgebildet ist kann eine Befestigung im Reifen bspw. durch eine geeignete Klebevorrichtung erfolgen.

Die erfindungsgemäße Halterung stellt einen eigenständigen handelbaren Gegenstand dar und kann an einer jeweils geeigneten Stelle der Innenfläche eines Luftreifens - oder an einen anderen Gummigegenstand durch geeignete Vulkanisationsvorgänge befestigt werden, die aus der Technologie der Reifen- und Förderbandreparatur bekannt sind. Dabei ist es bei der Kaltvulkanisation von Vorteil, daß die Halterung selbst und auch eventuell schon eingesetzte elektronische Bauelemente nicht den bei der Reifenvulkanisation üblichen hohen Temperaturen und Drücken ausgesetzt werden. Vielmehr kann die Halterung auch in der bei der Durchführung von Reifenreparaturen üblichen Weise auf der z.B. durch chemisches oder mechanisches Aufrauhen vorbereiteten Innenfläche des Reifens durch Kaltvulkanisation dauerhaft fixiert werden. Dies kann auch schon in einem geeigneten Schritt bei der Reifenherstellung erfolgen. Da weder hohe Temperaturen noch Drücke bei der Befestigung der Halterung im Reifen erforderlich sind, kann das empfindliche elektronische Element bereits vor dem Halterungseinbau in der vorgesehenen Aussparung positioniert und festgelegt werden. Auf grund der spezifischen Ausgestaltung des Hauptkörpers ist es jedoch auch möglich, zuerst die Halterung im Reifeninneren dauerhaft zu fixieren und erst danach das elektronische Element, d.h. den Transponderkörper, in der vorgesehenen Aussparung zu platzieren und durch die erfindungsgemäß vorgesehenen Mittel gegen willkürliches Lösen zu sichern.

Die erfindungsgemäße Halterung bietet gegenüber herkömmlichen Halterungssystemen für elektronische Bauelemente eine Reihe wesentlicher funktionaler und praktischer Vorteile. So kann die Halterung in der bei Reparaturpflastern gebräuchlichen Weise auf der Innenfläche des Reifens in einem bevorzugten Bereich durch Vorbereiten dieses Bereichs, d.h. chemisches und/oder mechanisches Aufrauhen, Bestreichen mit einem Vulkanisationsaktivator und Anrollen der Halterung dauerhaft befestigt werden, wobei insbesondere das Aufbringen eines Drucks in üblicher Weise mit den dafür notwendigen Werkzeugen durchgeführt werden kann. Erst nach der Befestigung der Halterung insbesondere durch Kaltvulkanisation können die elektronischen Bauelemente, d.h. ein Transponder, in die in dem Hauptkörper vorgesehene Aussparung eingesetzt werden, wobei die Form und die Abmessungen dieser Aussparung an die Form und Größe des Transponderkörpers angepaßt sind. Da das Hauptkörpermaterial aus Kunststoff, gummiähnlichen Material, Gummi und/oder einem geeigneten Kautschukmaterial bestehen kann, kann der Transponderkörper in die Aussparung entweder lose eingelegt oder durch Fingerdruck eingepreßt werden. Je nach der speziellen Ausführung der Überdeckung, die aus einer oder mehreren Lagen des Hauptkörpermaterials bestehen kann, wird von dieser Überdeckung ein elastischer Andruck auf den eingesetzten Transponderkörper ausgeübt und darüber hinaus ein Ablösen des Transponderkörpers in dem Innenraum des Reifens wirksam verhindert. Um einen festen Sitz des Transponderkörpers in der Aussparung auch nach langen Betriebszeiten zu gewährleisten, zeichnet sich eine zweckmäßige Weiterbildung der Erfindung dadurch aus, daß in der aus einer oder mehreren fest miteinander verbundenen Lagen aufgebauten Überdeckung Verfestigungselemente eingebettet sind, die im Reifenbau übliche Cord-Fäden aus Textilmaterialien, Kunststoff und/oder Metall, einzeln oder in Kombination, in paralleler oder Gitter- bzw. gewebeartiger Anordnung, zugfeste Füllstofffasern od. dgl. sein können. Durch diese Verfestigungselemente kann die Festigkeit der Überdeckung erheblich gesteigert werden, so daß auch größere Transponderkörper sicher im Hauptkörper gehalten werden.

Die Lagefixierung der Transponderkörper in der Aussparung des Hauptkörpers kann gemäß einer zweckmäßigen Ausgestaltung der Erfindung dadurch verbessert werden, daß die Überdeckung Formelemente, wie z.B. Löcher, Stege, od. dgl. aufweist, die mit entsprechenden Fixierelementen, wie Zapfen, Nuten, od. dgl. am elektronischen Bauelement, d.h. am Transponderkörper, zusammenwirken und durch zusätzlichen Formschluß den Transponderkörper in seiner Aussparung sichern. Der Formschluß kann hierbei auch durch die Elastizität der Lasche des Hauptkörpers erzielt werden, so daß keine Fixierelemente erforderlich sind. Bei einer zweckmäßigen Ausgestaltung der Erfindung weist die Überdeckung zwei endseitig in das Hauptkörpermaterial übergehende achsparallele Laschen auf, welche die Aussparung im Hauptkörper bis zu deren Mitte hin überdecken. In jeder Lasche kann ein Loch vorgesehen sein, mit dem diese Lasche über einen am Transponderkörper befestigten Zapfen unter einer gewissen Zugbeanspruchung gedrückt wird. Auf diese Weise wird der Transponderkörper beidseitig durch die beiden Laschen gehalten und die beiden Zapfenverbindungen in Verbindung mit der Eigenelastizität der beiden Laschen lassen geringfügige Eigenbewegungen des Transponderkörpers zu, verhindern jedoch sein Ablösen aus dem Hauptkörper, und zwar auch dann, wenn die von den Laschen überdeckte Aussparung im Hauptkörper lediglich als Breitschlitz ausgebildet ist und keine an die Form des Transponderkörpers angepaßte Einsenkung enthält.

Die Überdeckung kann auch als einteilige im mittleren Bereich der Halterung positionierte ein- oder mehrlagige Lasche ausgebildefsein, die mit ihren beiden Enden in das Hauptkörpermaterial übergeht und eine taschenförmige Aussparung im Hauptkörpermaterial überdeckt. Der etwa tablettenförmige Transponderkörper wird seitlich unter diese Lasche in die entsprechende Aussparung im Hauptkörper eingeschoben und durch die sich dabei ergebende Eigenspannung der Lasche in seinen Sitz gedrückt. Dieser Sitz kann eine der Form des Transponderkörpers angepaßte Einsenkung enthalten. Ferner ist auch bei dieser Ausführung ein Formelement, z.B. ein Loch oder ein Nut in der laschenförmigen Überdeckung zweckmäßig, das mit einem am Transponderkörper entsprechend ausgebildeten Fixierelement zusammenwirkt.

Die erfindungsgemäße Halterung mit mechanischen Halterungsmitteln der elektronischen Bauelemente, insbesondere eines Transponderkörpers, sind für diejenigen Anwendungsfälle geeignet, bei denen davon ausgegangen wird, daß die Lebensdauer der elektronischen Bauelemente kürzer als die Lebensdauer des jeweiligen Luftreifens ist bzw. der Transponder im Zuge einer Runderneuerung oder einer sonstigen Bearbeitung temporär entfernt wird. Dies kann beispielsweise bei Luftreifen für Nutzfahrzeuge, Lkws und Anhänger gelten, deren Laufleistung regelmäßig einige 100.000 km beträgt. Aufgrund der rein mechanischen Halterung können die jeweils verwendeten Transponderkörper aus dem Hauptkörper ausgebaut werden, wenn bspw. über die Auslesegeräte eine fehlerhafte Funktionsfähigkeit der elektronischen Bauelemente festgestellt wird. Herausnehmbare Transponder haben den weiteren Vorteil einer Recycle- und einer sortenreinen Trennmöglichkeit. Der relativ einfache Ausbau der Transponderkörper ist allerdings bei solchen Fällen problematisch, bei denen aufgrund von gesetzlichen Bestimmungen oder Produkthaftungsgründen verlangt wird, daß die Originaldaten des jeweiligen Luftreifens über dessen gesamte Lebensdauer hinweg fälschungssicher dem jeweiligen Luftreifen zugeordnet sind. In diesen Fällen müssen die die jeweiligen Datensätze enthaltenden elektronischen Bauelemente dauerhaft am oder im Reifen so befestigt sein, daß weder die Benutzer noch Reparateure die elektronischen Bauelemente, d.h. die Transponder, mit den eingeschriebenen Datensätzen ausbauen und durch andere mit neuen Datensätzen ersetzen können.

Bei der erfindungsgemäßen Halterung lassen sich die Forderungen einer dauerhaften Befestigung der elektronischen Bauelemente im Hauptkörper auf einfache Weise dadurch erfüllen, daß die Freiräume um den eingesetzten Transponderkörper mit einem fließfähigen und aushärtbaren Material ausgefüllt werden, das eine haftende Verbindung zwischen den Flächen des Transponderkörpers und denen des umgebenden Hauptkörpers eingeht und stoßdämpfende Eigenschaften besitzt. Als Füllmaterialien eignen sich vulkanisierbare Kautschukmaterialien, PUR-Schäume, thermoplastische Kunststoffe und/oder Silikone. Diese dauerhafte Fixierung ist für leichtgewichtige Transponderkörper mit kleinen Abmessungen geeignet, die im Fahrbetrieb des Reifens entsprechend geringeren Beanspruchungen durch die Walkbewegungen der Reifenteile unterworfen sind.

Weitere Vorzüge und Besonderheiten der erfindungsgemäßen Halterung lassen sich der folgenden Beschreibung mehrerer Ausführungsbeispiele anhand der Zeichnung entnehmen. Es zeigen:
- Fig. 1: eine erste erfindungsgemäße Halterung im Längsschnitt I-I ohne (a) und mit eingesetztem Transponderkörper (b) sowie in schematischer Draufsicht (c);
- Fig. 2: eine andere Halterungsausführung ohne (a) und mit eingesetztern Transponderkörper (b) in schematischem Längsschnitt II-II sowie in Draufsicht (c);
- Fig. 3: ein weiteres Ausführungsbeispiel der erfindungsgemäßen Halterung mit eingesetztem Transponderkörper im schematischen Längsschnitt;
- Fig. 4: ein weiteres Ausführungsbeispiel der erfindungsgemäßen Halterung mit eingesetztem Transponderkörper in schematischem Längsschnitt, und
- Fig. 5: ein weiteres Ausführungsbeispiel der erfindungsgemäßen Halterung.

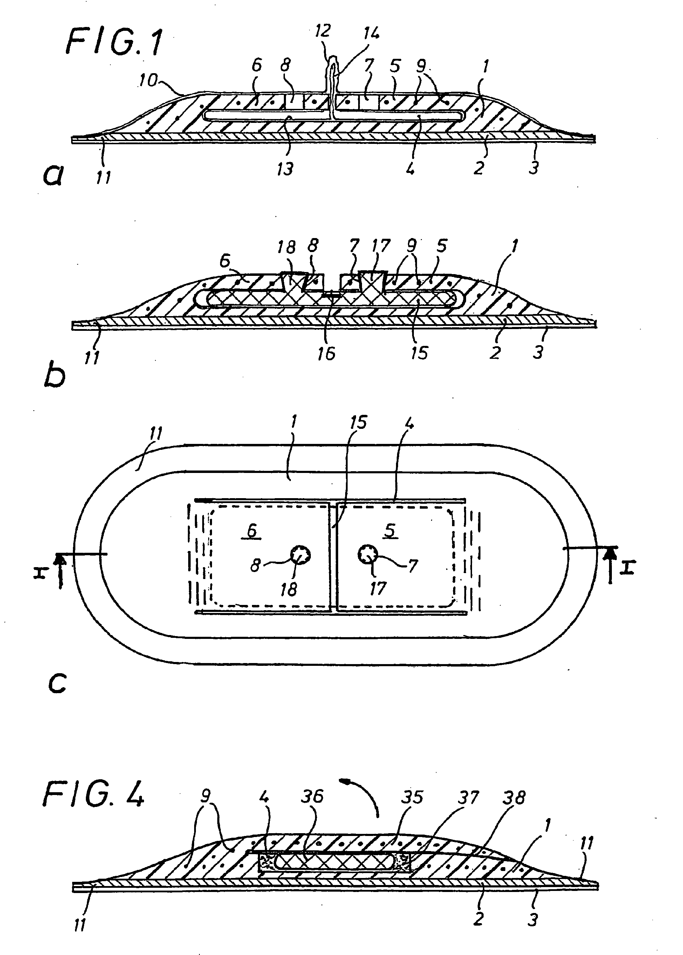

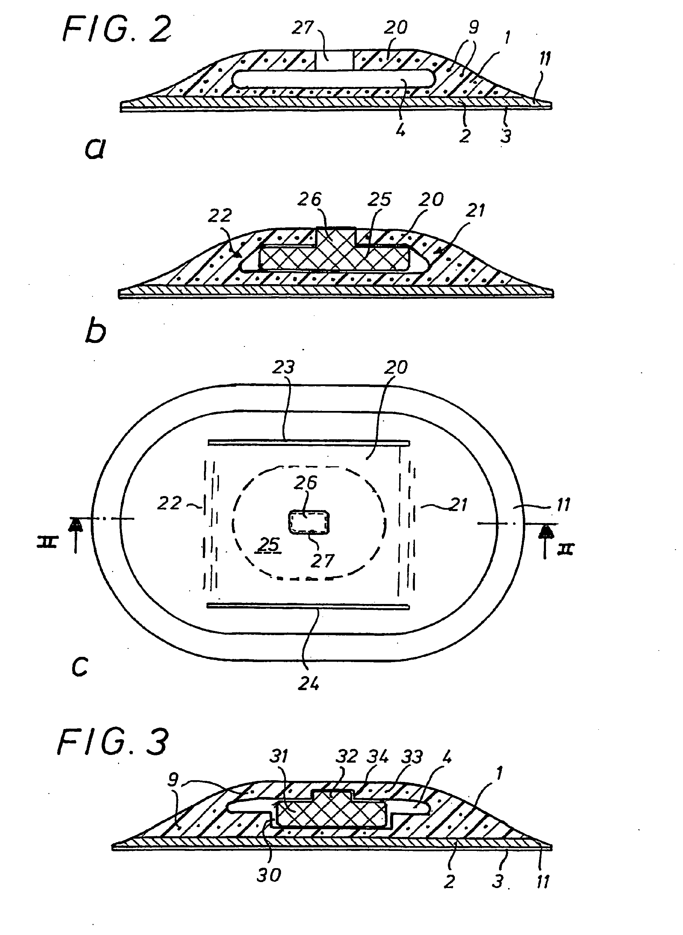

Die in der Zeichnung dargestellten Halterungen bzw. Pflaster sind alle eigenständige Erzeugnisse, in die jeweils ein elektronisches Bauelement, vorzugsweise ein Transponderkörper, eingesetzt und fixiert wird. Die dargestellten Halterungen bestehen aus einem Hauptkörper 1, der die dargestellte oder auch eine geringere Höhe haben kann. Dieser Hauptkörper 1 besteht bei der Ausführung nach Fig. 1 aus einem vulkanisierten Kautschukmaterial und hat eine von seinem mittleren Teil zum Rand hin allmählich abnehmende Dicke. An der Unterseite des Hauptkörpers 1 ist eine durchgehende Verbindungsschicht 2 aus einem unvulkanisierten, teilvulkanisierten oder vollvulkanisierten Kautschukmaterial vorgesehen, die von einer Schutzfolie 3 aus einem geeigneten Kunststoff abgedeckt ist. Die Schutzfolie 3 kann an der Verbindungsschicht 2 haften. Diese Schutzfolie 3 verhindert umweltbedingte Veränderungen bzw. Einflüsse auf eine spätere Vulkanisation der Verbindungsschicht 2 während der Lagerung und wird unmittelbar vor einem Befestigungsvorgang abgezogen. Bei der Ausführung nach Fig. 1 ist in dem Hauptkörper 1 eine großflächige Aussparung 4 von bspw. einer etwa rechteckigen Form (Fig. 3) ausgebildet, die von zwei in Draufsicht rechteckigen Laschen 5, 6 überdeckt wird. Im vorderen Endbereich jeder Lasche 5, 6 ist ein Loch 7, 8 ausgebildet. Diese Laschen 5, 6 gehen endseitig in den Hauptkörper 1 über und bestehen zweckmäßig aus dem Hauptkörpermaterial. Im Hauptkörper 1 und auch in jeder Lasche sind faden- bzw. strangförmige Verfestigungselemente 9 eingebettet, die aus Textilfilamenten, Kunststofffäden und/oder Metalldrähten bestehen können. Diese Verfestigungselemente 9 können eine gitterförmige oder gewebeartige Anordnung im Hauptkörpermaterial haben und sichern die Formhaltigkeit der eine Überdeckung bildenden Laschen 5, 6 auch nach langen Betriebszeiten.

Die vorgenannten Verfestigungselemente 9 können in jeder möglichen Ausführungsform der Erfindung vorgesehen sein.

Fig. 1 zeigt die erfindungsgemäße Halterung in seinem Transport- bzw. Lagerzustand. Die Oberseite der Halterung 1 ist durch eine dünne Folie 10 aus einem geeigneten Kunststoff abgedeckt, die mit dem umlaufenden vorstehenden Rand 11 der Verbindungsschicht 2 verklebt sein kann. Diese dünne Schutzfolie 10 kann im mittleren Bereich eine Griff-Falte 12 aufweisen, um das Abziehen der Folie durch einen Fingergriff zu erleichtern. Ferner kann auch die Aussparung 4 im Hauptkörper 1 mit einer weiteren Schutzfolie 13 ausgekleidet sein, die ebenfalls eine den Endschlitz der beiden Laschen 5, 6 durchragende Griff-Falte 14 aufweist.

Gemäß Fig. 1(b), (c) ist ein in Draufsicht rechteckiger scheibenförmiger Transponderkörper 15 in die Aussparung 4 des Hauptkörpers 1 eingesetzt. Natürlich kann die Aussparung 4 so ausgestaltet sein, daß sämtliche geeignete Formen von Transponderkörpern 15 aufgenommen werden können. Dieser Transponderkörper 15 enthält fest eingebettet mindestens einen Chip mit eingeschriebenen Datensätzen und mindestens eine Antenne sowie ggf. eine in seinem mittleren Teil unterhalb der Öffnung angeordnete Sensorik 16 zum Erfassen von unterschiedlichen Informationsdaten, bspw. eines Reifeninnendrucks. Der Transponderkörper 15 besteht vorzugsweise aus einem in sich druckfesten und formstabilen Material, so daß die empfindlichen elektronischen Bauteile, insbesondere der Anschluß der Antenne an den Chip gegen Stoßbeschädigungen weitgehend geschützt sind. Wie aus Fig. 1(b) ersichtlich, weist der Transponderkörper 15 zwei nach oben vorstehende Zapfen 17, 18 auf, die bei der dargestellten Ausführung konisch ausgebildet sind, jedoch auch eine andere Form haben können. Diese Zapfen 17, 18 sind in den Löchern 7, 8 der beiden Laschen 5, 6 aufgenommen, wodurch der Transponderkörper 15 in der Aussparung 4 lagefixiert wird.

Zum Einsetzen des Transponderkörpers 15 in die Aussparung 4 des Hauptkörpers 1 werden die beiden Laschen 5, 6 zurückgebogen und der Transponderkörper 15 wird in die so geöffnete Aussparung 4 eingeschoben. Nach dieser Positionierung werden die beiden Laschen 5, 6 zurückgebogen und mit ihren Löchern 7, 8 über die Zapfen 17, 18 gedrückt.

Das in Fig. 2(a) bis (c) dargestellte Ausführungsbeispiel entspricht in seinem grundsätzlichen Aufbau dem vorstehend anhand der Fig. 1 beschriebenen Halterung, so daß gleichartige Bauteile mit den gleichen Bezugszeichen gekennzeichnet sind. Auch diese Halterung weist ein durch Verfestigungselemente 9 armierter Hauptkörper 1 aus einem vulkanisierten Kautschukmaterial, eine an der Unterseite des Hauptkörpers 1 durchgehend befestigte Verbindungsschicht 2 aus unvulkanisiertem Kautschukmaterial und eine untere Schutzfolie 3 auf. Zum Schutz des Hauptkörpers 1 während der Lagerung und des Transportes kann eine dünne Schutzfolie 10 entsprechend Fig. 1 die Oberseite des Hauptkörpers 1 abdecken. Bei der in Fig. 2 dargestellten Halterung wird die im Hauptkörper 1 ausgebildete Aussparung 4 durch eine durchgehende Lasche 20 überdeckt, die - wie in Fig. 2(c) durch die parallelen unterbrochenen Strichlinien 21, 22 angedeutet - in das Hauptkörpermaterial einteilig übergeht und seitlich durch je einen Schlitz 23, 24 von dem Hauptkörpermaterial bzw. der Aussparung 4 getrennt ist. Durch einen der beiden Schlitze hindurch wird ein hier abgerundetscheibenförmiger Transponderkörper 25 eingeschoben, der in Fig. 2(b) in Kreuzschraffur und in Fig. 2(c) in einer unterbrochenen Strichlinie dargestellt ist. Im zentralen Teil weist der Transponderkörper 25 einen hier etwa rechteckig ausgebildeten Zapfen 26 auf, der nach seinem Einschieben in die Aussparung 4 ein in der laschenförmigen Überdeckung ausgebildetes Loch 27 durchragt. Beim seitlichen Einschieben des Transponderkörpers 25 durch einen der Schlitze 23, 24 wird die laschenförmige Überdeckung unter Spannung gesetzt und elastisch gedehnt, wodurch nach der Endpositionierung ein dauernder Andruck auf den Transponderkörper ausgeübt wird. Dieser Andruck in Verbindung mit der formschlüssigen Aufnahme seines Zapfens 26 in dem Loch 27 gewährleistet die erforderliche Lagefixierung und ermöglicht geringfügige Ausweichbewegungen bei Stoßbelastungen.

Die in Fig. 3 dargestellte Halterung entspricht weitgehend der Ausführung nach Fig. 2, so daß gleichartige Bauteile mit gleichen Bezugszeichen gekennzeichnet sind. Bei dieser Ausführung weist die Aussparung 4 im mittleren Teil eine untere Einsenkung 30 auf, deren Form der Umfangskontur des jeweiligen Transponderkörpers 31 angepaßt ist, so daß dessen Basisteil von den Seitenwänden dieser Einsenkung 30 relativ dicht umschlossen wird. An der Oberseite des Transponderkörpers 31 ist ein Steg 32 angeformt, der in eine in der überdeckenden Lasche 33 ausgebildete Quernut 34 formschlüssig eingreift. Bei dieser Ausführung kann die laschenförmige Überdeckung 33 die in Fig. 2(b) gezeigte Form haben und von zwei seitlichen Schlitzen 23, 24 begrenzt sein. Es ist allerdings auch möglich, daß die laschenförmige Überdeckung 33 an ihren beiden Enden und an einer Seite in das Material des Hauptkörpers 1 übergeht und nur einen einzigen seitlichen Schlitz 24 aufweist, wodurch sich die Form einer Tasche ergibt. In diese Tasche wird der Transponderkörper 31 durch den einzigen seitlichen Schlitz hindurch in die Aussparung 4 eingeschoben, bis der Basisteil des Transponderkörpers 31 in der Einsenkung 30 aufgenommen wird. Auch bei diesem Ausführungsbeispiel kann die laschenförmige Überdeckung 33 einen kontinuierlichen elastischen Andruck auf den eingesetzten Transponderkörper 31 ausüben, dessen Lagesicherung einmal durch die Einsenkung 30 und zusätzlich durch den formschlüssigen Eingriff des Quersteges 32 in die Quernut 34 gesichert wird.

Auch die in Fig. 4 dargestellte Ausführung entspricht in ihrem grundsätzlichen Aufbau weitgehend den vorstehend beschriebenen Halterungen nach Fig. 1 bis 3, so daß auch hier gleichartige Bauteile mit den gleichen Bezugszeichen versehen sind. Bei dieser Halterung nach Fig. 4 ist eine einzige Lasche 35 mit ihrem in Fig. 4 linken Ende mit dem Hauptkörper 1 einteilig integriert ausgebildet, so daß diese Lasche 35 aus der dargestellten Lage in Richtung des Pfeiles aufgeklappt werden kann, wodurch die im Hauptkörper ausgebildete Aussparung 4 zugänglich wird, um einen hier tablettenförmigen Transponderkörper 36 in diese Aussparung 4 einzusetzen. Nach der Positionierung des Transponderkörpers 36 können die in der Aussparung 4 verbleibenden Freiräume mit einem geeigneten vorzugsweise fließfähigen Füllmaterial 37 ausgefüllt werden, das den Transponderkörper 36 dicht umschließt. Dieses Füllmaterial kann eine vulkanisierbare Kautschukmischung, ein PUR-Schaumstoff, ein Elastomer und/oder ein Silikon sein. Zweckmäßig sollte dieser Füllstoff 37 stoßdämpfende Eigenschaften haben und mit den umgebenden Flächen fest haftende Verbindungen eingehen. Nach Einsetzen des Transponderkörpers 36 und Verfüllen der Freiräume mit dem Füllstoff 37 wird die Lasche 35 in ihre dargestellte Position zurückgeklappt und mit dem unteren Hauptkörpermaterial großflächig fest verbunden, beispielsweise durch Aufbringen geeigneter Klebstoffe oder durch Kaltvulkanisation. Mit 38 ist die Verbindungsfläche der zungenförmigen Überdeckung 35 mit dem unteren Material des Hauptkörpers 1 gekennzeichnet. Diese Ausführung ist speziell für eine dauerhafte Fixierung des Transponderkörpers 36 an der Innenfläche eines Luftreifens konzipiert, wobei seine Lagefixierung durch die Form der Aussparung 4 und die Füllstoffe 37 sowie durch die ausreichend feste Überdeckung mittels der laschenförmigen Zunge 35 sichergestellt wird.

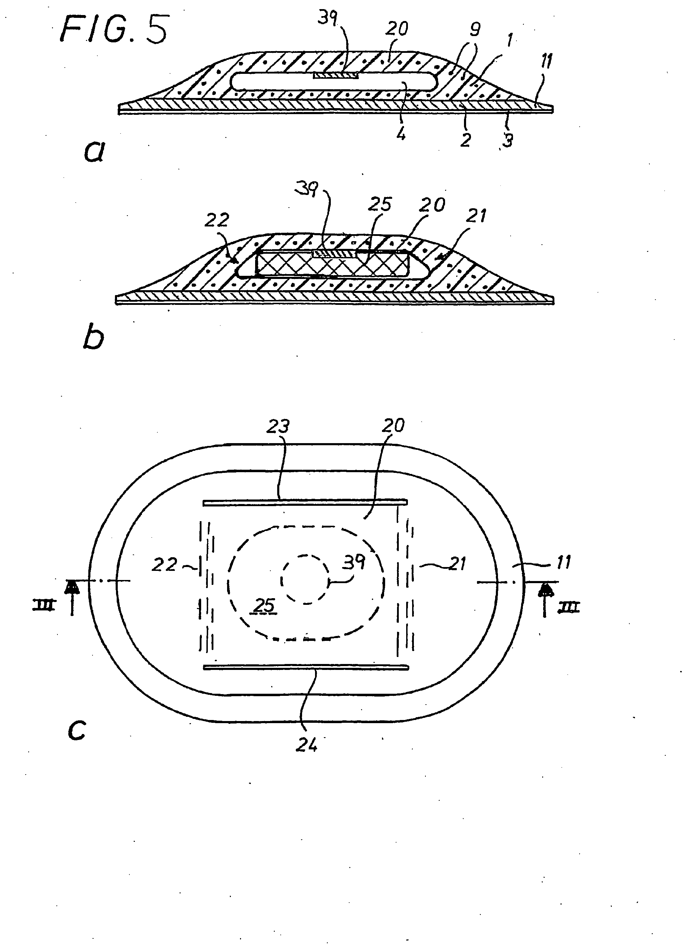

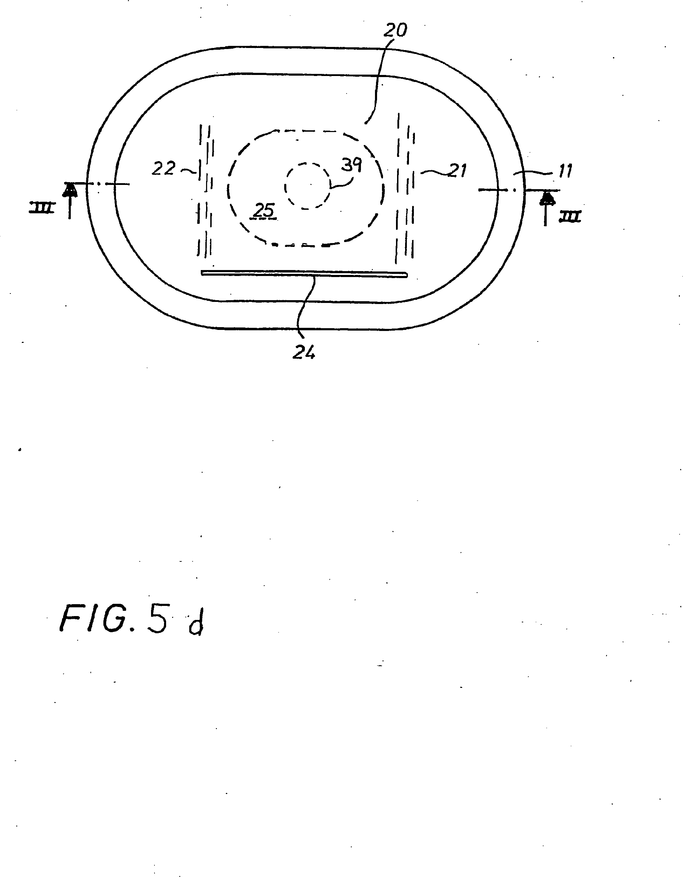

Die in der Figur 5 dargestellte Halterung weist in der Aussparung 4 an dem Hauptkörper 1 angeordnet ein Befestigungsmittel 39 auf. Wie in der Figur 5a dargestellt ist, kann dieses Befestigungsmittel 39 in die Aussparung 4 hineinragen. Der Transponderkörper 25 kann ein entsprechendes Gegenstück zu dem Befestigungsmittel 39 aufweisen (nicht dargestellt). Dieses Gegenstück kann dann im eingesetzten Zustand des Transponderkörpers 25 in die Aussparung 4 des Hauptkörpers 1 mit dem Befestigungsmittel 39 in Eingriff gelangen. Dadurch kann die Lage des Transponderkörpers 25 in der Aussparung 4 fixiert werden. Das Befestigungsmittel 39 kann beispielsweise ein Verrastelement sein, welches in ein entsprechendes Gegenstück in den Transponderkörper 25 eingreift. Als Verrastelement könnte beispielsweise ein druckknopfähnlicher Mechanismus zum Einsatz kommen. Das Befestigungsmittel 39 ist zum dauerhaften Befestigen des Transponderkörpers 35 an dem Hauptkörper 1 geeignet und erlaubt zusätzlich ein Lösen der Befestigung, sofern dies gewünscht ist. Als Befestigungsmittel 39 kann bspw. auch ein mit Zähnen versehener Rastnoppen vorgesehen sein, welcher wiederum in das entsprechende Gegenstück an dem Transponderkörper 25 eingreift.

Die vorgenannten Gegenstücke des Transponderkörpers 25 sind mit dem Transponderkörper 25 fest verbunden.

Natürlich können auch andere geeignet Befestigungsmittel mit entsprechenden Gegenstücken vorgesehen sein.

Es ist weiterhin möglich, dass die in Figur 5 dargestellte Halterung ein 24 oder zwei 23, 24 seitliche Schlitze aufweist. Das ist in den Figuren 5c und 5d dargestellt. Durch diesen Schlitz 24 oder durch einen der beiden Schlitze 23, 24 kann der Transponderkörper in die Aussparung 4 eingeschoben werden um dann über das Befestigungsmittel 39 und dessen Gegenstück befestigt zu werden. Wenn nur ein Schlitz 24 vorgesehen ist wird durch die Lasche 20 eine Tasche gebildet in die der Transponderkörper 25 eingeschoben wird.

Die Figur 5b ist eine schematische Schnittdarstellung entlang der Schnittlinie III in den Figuren 5c und 5d.

Weiterhin ist es möglich keinerlei Befestigungsmittel vorzusehen, wobei der Transponderkörper selbst beispielsweise an einem quer, längs und/oder schräg verlaufenden Steg aufweist, der dann im eingeschobenen Zustand über die Elastizität der durchgehenden Lasche 20 gehalten wird. Hierbei wird sich die Lasche an der Stelle des Stegs etwas nach oben verformen, so dass eine ausreichende Haltekraft vorliegt.

Darüber hinaus ist es auch möglich, dass der Transponderkörper keinerlei Steg bzw. Erhebung aufweist und nur durch die Elastizität der Lasche 20 gehalten wird.

Die Erfindung ist nicht auf die dargestellten Ausführungsbeispiele beschränkt. So können beispielsweise auch bei den Ausführungen nach Figuren 1 bis 3 und 5 Klebe- bzw. Füllstoffe in die verbleibenden Freiräume der Aussparung eingebracht werden, um eine dauerhafte Fixierung des jeweiligen Transponderkörpers zu erreichen. Ferner können die Transponderkörper auch andere Formen haben, beispielsweise als zylindrische Körper ausgeführt sein, die dann in entsprechend geformten Aussparung bzw. Einsenkungen im Hauptkörper 1 formschlüssig aufgenommen werden können. Schließlich ist auch eine geeignete Kombination von bei einem oder mehreren Ausführungsbeispielen verwirklichten Maßnahmen bei anderen Ausführungsbeispielen möglich.

## Patentansprüche

1. Halterung zur Befestigung eines elektronischen Bauelements an einem Gummiartikel, vorzugsweise einem Reifen, einem Fördergurt, od. dgl., mit
- einer Verbindungsschicht (2), und
- einem mit der Verbindungsschicht (2) dauerhaft verbundenen Hauptkörper (1) in dem eine Aussparung (4) zur Aufnahme eines elektronischen Bauelements (15, 25, 3 1, 36) ausgebildet ist, wobei der Hauptkörper (1) eine integrierte Überdeckung (5, 6; 20; 33; 35) der Aussparung (4) aufweist,
**dadurch gekennzeichnet, dass**
die Verbindungsschicht (2) bis zum Gebrauch von einer haftenden Schutzfolie (3) abgedeckt ist,
die Überdeckung (5, 6; 20; 33) Formelemente (7, 8; 27; 34) aufweist, die zur Lagefixierung des elektronischen Bauelements (15, 25, 31) mit form-angepaßten Fixierelementen (17, 18, 26, 32) am elektronischen Bauelement (15, 25, 31, 36) zusammenwirken und die Überdeckung (5, 6; 20; 33) mit dem Hauptkörper (1) zumindest einen seitlichen Schlitz (23, 24) zum Einsetzen des elektronischen Bauelements (15, 25, 31, 36) bildet.

2. Halterung nach Anspruch 1,
**dadurch gekennzeichnet, dass**
in der Überdeckung (5, 6; 20; 33; 35) Verfestigungselemente (9) eingebettet sind.

3. Halterung nach zumindest einem der Ansprüche 1 und 2,
**dadurch gekennzeichnet, dass**
die Form der Aussparung (4) an die Form des elektronischen Bauelements angepaßt ist.

4. Halterung nach zumindest einem der Ansprüche 1 bis 3,
**dadurch gekennzeichnet, dass**
die Aussparung (4) eine Einsenkung (30) aufweist, deren Form der Umgangskontur des elektronischen Bauelements (31) entspricht.

5. Halterung nach zumindest einem der Ansprüche 1 bis 4,
**dadurch gekennzeichnet, dass**
die Überdeckung der Aussparung (4) zwei diametral gegenüberliegende Laschen (5, 6) aufweist, die endseitig in das Hauptkörpermaterial übergehen und an diesem endseitigen Übergang zur Freigabe der Aussparung (4) aufklappbar sind.

6. Halterung nach Anspruch 5,
**dadurch gekennzeichnet, daß**
jede der beiden Laschen (5, 6) ein Loch (7, 8) zur Aufnahme je eines am elektronischen Bauelement befestigten Haltezapfens (17, 18) aufweist.

7. Halterung nach zumindest einem der Ansprüche 1 bis 4,
**dadurch gekennzeichnet, dass**
die Überdeckung eine Lasche (20) aufweist, die beidendig in den Hauptkörper (1) übergeht und deren Breite die Breite der Aussparung (4) übersteigt.

8. Halterung nach Anspruch 7,
**dadurch gekennzeichnet, dass**
in der beidendig in den Hauptkörper (1) übergehenden Lasche (20) mittig ein Loch (27) zur Aufnahme eines an dem elektronischen Bauelement befestigten Haltezapfens (26) ausgebildet ist.

9. Halterung nach Anspruch 7,
**dadurch gekennzeichnet, dass**
an einer Innenseite der Lasche (20) ein Befestigungsmittel (39) angebracht ist, das mit an dem elektronischen Bauelement (25) angeordneten Gegenstück in einem Einbauzustand des elektronischen Bauelements (25) in Eingriff steht.

10. Halterung nach zumindest einem der Ansprüche 1 bis 4,
**dadurch gekennzeichnet, dass**
die Überdeckung als Lasche (35) ausgebildet ist, die mit einem Ende in den Hauptkörper (1) integriert übergeht und nach Einbau des elektronischen Bauelements (36) in die Aussparung (4) mit der Basis des Hauptkörpers (1) festhaftend verbindbar ist.

11. Halterung nach zumindest einem der Ansprüche 1 bis 10,
**dadurch gekennzeichnet, dass**
die nach dem Positionieren des elektronischen Bauelements (36) in der Aussparung (4) verbleibenden Freiräume mit einem stoßdämpfenden Haftmaterial (37) ausgefüllt sind.

12. Halterung nach zumindest einem der Ansprüche 1 bis 11,
**dadurch gekennzeichnet, dass**
das elektronische Bauelement (15, 25, 31, 36) in der Aussparung (4) zusätzlich zur mechanischen Halterung durch die Überdeckung (5, 6; 20; 33; 35) durch Kleben bzw. Vulkanisation fixiert ist.

13. Halterung nach zumindest einem der Ansprüche 1 bis 12,
**dadurch gekennzeichnet, dass**
das elektronische Bauelement (15, 25, 31, 36) ein Transponderkörper ist.

14. Halterung nach zumindest einem der Ansprüche 1 bis 13,
**dadurch gekennzeichnet, dass**
die Verbindungsschicht (2) unvulkanisiert, vulkanisierbar, teil- oder durchvulkanisiert ausgebildet ist.

15. Halterung nach zumindest einem der Ansprüche 1 bis 14,
**dadurch gekennzeichnet, dass**
der Hauptkörper (1) unvulkanisiert, vulkanisierbar, teil- oder durchvulkanisiert ausgebildet ist.

## Claims

1. A holding device for fastening an electric component to a rubber article, preferably a tire, a conveyor belt or the like, comprising
- a connection layer (2) and
- a main body (1) permanently connected to said connection layer (2) in which main body (1) a recess (4) for receiving an electronic component (15, 25, 31, 36) is formed, wherein said main body (1) comprises an integrated covering (5, 6; 20; 33; 35) for said recess (4),
**characterized in that**
said connection layer (2) is covered by an adhesive protection film (3) until it is used,
said covering (5, 6; 20; 33) comprises forming members (7, 8; 27; 34) cooperating with form-matching fixing members (17, 18, 26, 32) on said electronic component (15, 25, 31, 36) in order to fix the position of said electronic component (15, 25, 31), and said covering (5, 6; 20; 33) together with said main body (1) forms at least one lateral slot (23, 24) for inserting said electronic component (15, 25, 31, 36).

2. The holding device according to claim 1,
**characterized in that**
hardening members (9) are embedded into said covering (5, 6; 20; 33; 35).

3. The holding device according to at least one of the claims 1 and 2,
**characterized in that**
the form of said recess (4) is adapted to the form of said electronic component.

4. The holding device according to at least one of the claims 1 to 3,
**characterized in that**
said recess (4) comprises a hollow (30) the form of which corresponds to the peripheral contour of said electronic component (31).

5. The holding device according to at least one of the claims 1 to 4,
**characterized in that**
said covering of said recess (4) comprises two diametrically opposing flaps (5, 6) which at their ends go over into the material of said main body and which are unfoldable at said end transition in order to expose said recess (4).

6. The holding device according to claim 5,
**characterized in that**
each of said flaps (5, 6) comprises a hole (7, 8) for receiving a holding dog (17, 18) attached to said electronic component.

7. The holding device according to at least one of the claims 1 to 4,
**characterized in that**
said covering comprises a flap (20) which at its both ends goes over into said main body and the width of which exceeds the width of said recess (4).

8. The holding device according to claim 7,
**characterized in that**
in said flap (20) which at its both ends goes over into said main body (1) a hole (27) is formed for receiving a holding dog (26) attached to said electronic component.

9. The holding device according to claim 7,
**characterized in that**
at an inner side of said flap (20) an attachment means (39) is mounted which engages with a counterpart arranged on that electronic component (25) when said electronic component (25) is in a mounted condition.

10. The holding device according to at least one of the claims 1 to 4,
**characterized in that**
said covering is formed as a flap (25) which at one end integrally goes over into said main body (1) and which can be connected with the base of said main body (1) in a fixedly adhering condition after said electronic component (36) has been mounted in said recess (4).

11. The holding device according to at least one of the claims 1 to 10,
**characterized in that**
the free spaces remaining in said recess (4) after said electronic component (36) has been positioned are filled with a shock absorbing adhesive agent (37).

12. The holding device according to at least on of the claims 1 to 11,
**characterized in that**
said electronic component (15, 25, 31, 36) is fixed in said recess (4) by bonding and vulcanizing, respectively, in addition to said mechanical holding provided by said covering (5, 6; 20; 33; 35).

13. The holding device according to at least one of the claims 1 to 12,
**characterized in that**
said electronic component (15, 25, 31, 36) is a transponder body.

14. The holding device according to at least on of the claims 1 to 13,
**characterized in that**
said connection layer (2) is provided in an unvulcanized condition, in a vulcanizable condition, in a partially vulcanized condition or in a completely vulcanized condition.

15. The holding device according to at least one of the claims 1 to 14,
**characterized in that**
said main body (2) is provided in an unvulcanized condition, in a vulcanizable condition, in a partially vulcanized condition or in a completely vulcanized condition.

## Revendications

1. Support pour la fixation d'un composant électronique sur un article en caoutchouc, de préférence un pneumatique, une bande transporteuse ou des éléments similaires, comprenant
- une couche de liaison (2) et
- un élément principal (1), relié de manière indissociable à la couche de liaison (2), dans lequel est ménagé un évidement (4) à l'intérieur duquel un module électronique (15, 25, 31, 36) est destiné à être inséré, l'élément principal (1) comportant, en tant que partie intégrante de celui-ci, une portion de recouvrement (5, 6 ; 20 ; 33 ; 35) de l'évidement (4),
**caractérisé en ce que**
la couche de liaison (2) est recouverte, jusqu'à l'utilisation du support, d'une pellicule de protection adhésive (3),
la portion de recouvrement (5, 6 ; 20 ; 33) comporte des segments de forme (7, 8 ; 27 ; 34) qui, pour assurer la fixation en position du composant électronique (15, 25, 31), opèrent en combinaison réciproque avec des organes de fixation (17, 18, 26, 32) dont est muni le composant électronique (15, 25, 31, 36) et dont la forme est géométriquement adaptée en correspondance, et la portion de recouvrement (5, 6 ; 20 ; 33) définit, avec l'élément principal (1), au moins une fente latérale (23, 24) pour la mise en place du composant électronique (15, 25, 31, 36).

2. Support selon la revendication 1,
**caractérisé en ce que**
des éléments de consolidation (9) sont intégrés dans la portion formant recouvrement (5, 6 ; 20 ; 33 ; 35).

3. Support selon au moins l'une des revendications 1 et 2,
**caractérisé en ce que**
la forme de l'évidement (4) est adaptée à la géométrie du composant électronique.

4. Support selon au moins l'une des revendications 1 à 3,
**caractérisé en ce que**
l'évidement (4) comporte une partie en creux (30), dont la forme correspond à la configuration périphérique du composant électronique (31).

5. Support selon au moins l'une des revendications 1 à 4,
**caractérisé en ce que**
la portion formant recouvrement de l'évidement (4) comporte deux éclisses diamétralement opposées (5, 6) qui, au niveau de leur extrémité, se fondent dans la matière constitutive de l'élément principal et qui peuvent être relevées en position d'ouverture au niveau de cette zone de transition d'extrémité pour dégager l'évidement (4).

6. Support selon la revendication 5,
**caractérisé en ce que**
chacune des deux éclisses (5, 6) comporte un orifice (7, 8) dans lequel est destiné à venir se loger respectivement un ergot de retenue (17, 18) fixé sur le composant électronique.

7. Support selon au moins l'une des revendications 1 à 4,
**caractérisé en ce que**
la portion formant recouvrement comprend une éclisse (20), qui au niveau de ses deux extrémités se fond dans l'élément principal (1) et dont la largeur est supérieure à la largeur de l'évidement (4)

8. Support selon la revendication 7,
**caractérisé en ce que**
dans la portion centrale de l'éclisse (20) se fondant au niveau de ses deux extrémités dans l'élément principal (1) il est prévu un orifice (27) dans lequel un ergot de retenue (26), fixé sur le composant électronique, est destiné à venir se loger.

9. Support selon la revendication 7,
**caractérisé en ce que**
sur la face intérieure de l'éclisse (20) il est prévu un moyen de fixation (29) qui, lorsque le composant électronique (25) est inséré dans son support, est en prise d'engagement avec un élément conjugué que comporte en correspondance le composant électronique (25).

10. Support selon au moins l'une des revendications 1 à 4,
**caractérisé en ce que**
la portion formant recouvrement se présente sous la forme d'une éclisse (35) qui, au niveau d'une de ses extrémités, est réalisée solidaire par moulage de l'élément principal (1) et qui, après la mise en place du composant électronique (36) dans l'évidement (4), est destinée à être reliée par adhérence à la base de l'élément principal (1).

11. Support selon au moins l'une des revendications 1 à 10,
**caractérisé en ce que**
les espaces libres qui subsistent après l'implantation du composant électronique (36) dans l'évidement (4) sont comblés au moyen d'une substance adhésive amortissant les chocs (37).

12. Support selon au moins l'une des revendications 1 à 11,
**caractérisé en ce que**
le composant électronique (15, 25, 31, 36) est, en plus de son maintien dans l'évidement (4) par l'action mécanique exercée par le recouvrement (5, 6 ; 20 ; 33 ; 35), immobilisé en position dans celui-ci par collage ou vulcanisation.

13. Support selon au moins l'une des revendications 1 à 12,
**caractérisé en ce que**
le composant électronique (15, 25, 31, 36) est un appareil de réponse.

14. Support selon au moins l'une des revendications 1 à 13,
**caractérisé en ce que**
la couche de liaison (2) est non vulcanisée, susceptible d'être vulcanisée, vulcanisée partiellement ou dans toute sa masse.

15. Support selon au moins l'une des revendications 1 à 14,
**caractérisé en ce que**
l'élément principal (1) est non vulcanisé, susceptible d'être vulcanisé, vulcanisé partiellement ou dans toute sa masse.
